# EUROPÄISCHE PATENTANMELDUNG

(11) **EP 2 390 129 A1**
(43) Veröffentlichungstag der Anmeldung: **30.11.2011**
(21) Anmeldenummer: 10164441.7
(22) Anmeldetag: 31.05.2010
(51) Int. Cl.: B60K 28/06, G07C 5/08, G07C 9/00, G01N 33/98

(54) **Vorrichtung und Verfahren zur Erkennung einer korrekten Anwendung eines Alkoholmessgerätes von einem Fahrer in einem Fahrzeug**

(71) Anmelder: Dräger Safety AG & Co. KGaA, 23560 Lübeck (DE)
(72) Erfinder: Morley, Dr. Stefan, 23556, Lübeck (DE); Huth, Andreas, 23558, Lübeck (DE); Neumann, Ingo, 23843, Bad Oldesloe (DE); Lagois, Dr. Johannes, 23558, Lübeck (DE)
(74) Vertreter: UEXKÜLL & STOLBERG

(57) **Zusammenfassung**

Vorrichtung zur Erkennung einer korrekten Anwendung eines Alkoholmessgerätes (10) von einem Fahrer (32) in einem Fahrzeug (20) umfassend wenigstens das Alkoholmessgerät eine Auswerte- und Steuereinheit (12) und eine Kameraeinheit (14), wobei von dem Bildfeld der Kameraeinheit wenigstens ein Gesichtsbereich des Fahrers erfassbar ist, wobei die Auswerte- und Steuereinheit mit einer Fahrkontrolleinheit (16) zur Erkennung einer Fahrzeugbewegung, der Kameraeinheit und dem Alkoholmessgerät verbunden ist und die Kameraeinheit von der Auswerte- und Steuereinheit in Abhängigkeit der Fahrkontrolleinheit in der Weise aktivierbar ist, dass wenigstens der Gesichtsbereich des Fahrers erfasst wird.

## Beschreibung

Die Erfindung betrifft eine Vorrichtung und ein Verfahren zur Erkennung einer korrekten Anwendung eines Alkoholmessgerätes von einem Fahrer in einem Fahrzeug gemäß den Ansprüchen 1 und 9.

In Fahrzeugen (PKW, LKW, Bus etc.) werden Alkoholmessgeräte in Kombination mit einer Wegfahrsperre zur Verhinderung einer unbefugten Inbetriebnahme des Fahrzeugs installiert. Hierbei soll insbesondere ein Starten des Fahrzeuges durch einen alkoholisierten Fahrer verhindert werden. Eine solche Vorrichtung wird als Alkohol-Interlock-System bezeichnet.

Aus dem Stand der Technik sind Interlocksysteme bekannt, bei denen zusätzlich eine Kamera zur Dokumentation des Fahrers vorgesehen ist. So ist beispielsweise aus der US 6,748,792 B1 bekannt, eine Kamera in einem Fahrzeug zur Aufnahme des Fahrers bei Abgabe einer Atemalkoholprobe vorzusehen.

Grundsätzlich besteht bei der Anwendung eines Alkohol-Interlock-Systems die Möglichkeit der Manipulation. Eine zweite Person, die nicht der Fahrer ist, könnte die Atemalkoholprobe im Fahrzeug abgeben. Zur Vermeidung einer solchen Umgehungsmöglichkeit weisen bekannte Alkohol-Interlock-Systeme eine Wiederholungsfunktion der Alkoholmessung auf. Das bedeutet, das Interlocksystem fordert den Fahrer nach einem zufällig generierten Zeitintervall erneut auf, eine Alkoholmessung durchzuführen.

Alkohol-Interlock-Systeme mit einer Kamera können auch bei dieser wiederholenden Alkoholmessung ein Bild des Probengebers aufnehmen. Nachteilig der bekannten Alkohol-Interlock-Systeme mit Kamera ist jedoch, dass eine Aufnahme des Atemprobengebers im Moment der Abgabe der Atemprobe erfolgt. Damit wird zwar der Atemprobengeber dokumentiert, dieser muss aber nicht zwangsläufig auch der Fahrer sein. Eine zweite Person, die auf dem Fahrersitz die Atemprobe abgibt und auch von der Kamera dokumentiert wurde, könnte nach dem Start des Fahrzeuges den Fahrersitz verlassen und ein zweiter alkoholisierter Benutzer das Fahrzeug führen.

Der vorliegenden Erfindung liegt daher die Aufgabe zugrunde, ein Alkohol-Interlock-System zur Verfügung zu stellen, mit Hilfe dessen die vorstehend genannten Nachteile überwunden werden. Es ist insbesondere Aufgabe der Erfindung die Manipulationssicherheit eines Alkohol-Interlock-Systems zu erhöhen.

Diese Aufgabe wird durch eine Vorrichtung und ein Verfahren zur Erkennung einer korrekten Anwendung eines Alkoholmessgerätes von einem Fahrer eines Fahrzeuges mit den Merkmalen der unabhängigen Ansprüche gelöst.

In den davon abhängigen Ansprüchen sind vorteilhafte Ausgestaltungen und Weiterbildungen der Erfindung angegeben.

Die erfindungsgemäße Vorrichtung umfasst dabei wenigstens das Alkoholmessgerät, eine Auswerte- und Steuereinheit und eine Kameraeinheit, wobei die Auswerte- und Steuereinheit mit einer Fahrkontrolleinheit zur Erkennung einer Fahrzeugbewegung, der Kameraeinheit und dem Alkoholmessgerät verbunden ist und die Kameraeinheit von der Auswerte- und Steuereinheit in Abhängigkeit der Fahrkontrolleinheit aktivierbar ist. Von dem Bildfeld der Kameraeinheit ist wenigstens ein Gesichtsbereich der Testperson erfassbar.

Mit der erfindungsgemäßen Vorrichtung kann in vorteilhafter Weise aufgrund der Erfassung und Auswertung der Fahrzeugbewegung durch die Fahrkontrolleinheit und der Aktivierbarkeit der Kameraeinheit von der Auswerte- und Steuereinheit der Fahrer des Fahrzeuges dokumentiert werden. Die Kameraeinheit ist dabei so eingerichtet, dass das Bildfeld wenigstens den Gesichtbereich der Testperson erfasst.

Nach einer durchgeführten Alkoholmessung kann in Abhängigkeit vom Ergebnis dieser Messung das Fahrzeug gestartet werden. Sobald von der Fahrkontrolleinheit eine Fahrzeugbewegung registriert wird, ist die Kameraeinheit von der Auswerte- und Steuereinheit zur Aufnahme des Fahrers des Fahrzeuges aktivierbar. Somit kann in vorteilhafter Weise der Fahrer des Fahrzeuges dokumentiert werden.

In einer weiteren vorteilhaften Ausbildung der erfindungsgemäßen Vorrichtung ist die Kameraeinheit von der Auswerte- und Steuereinheit zusätzlich in Abhängigkeit des Alkoholmessgerätes zur Aufnahme des Fahrers aktivierbar. Die Kameraeinheit ist somit während oder im Anschluss einer Alkoholmessung zur Aufnahme des Fahrers von der Auswerte- und Steuereinheit in Abhängigkeit der Fahrkontrolleinheit und des Alkoholmessgerätes aktivierbar.

In einer wiederum bevorzugten Ausführungsform ist eine Datenspeichereinheit vorgesehen, in welcher wenigstens eine Aufnahme des Fahrers speicherbar ist.

Die Auswerte- und Steuereinheit ist ausgeführt, die Fahrkontrolleinheit abzufragen, ob sich das Fahrzeug bewegt. Im Fall einer Fahrzeugbewegung wird durch die erfindungsgemäße Vorrichtung aufgrund der Aktivierung der Kameraeinheit durch die Auswerte- und Steuereinheit eine Aufnahme des Fahrers ermöglicht. Diese Aufnahme kann mit einer in dem Datenspeicher abgelegten vorherigen Aufnahme des Fahrers verglichen werden.

Die Auswerte- und Steuereinheit kann dabei so ausgeführt sein, eine in der Datenspeichereinheit abgelegten Aufnahme des Fahrers mit einer Aufnahme bei Registrierung einer Fahrzeugbewegung durch die Fahrkontrolleinheit zu vergleichen. Bei Nichtübereinstimmung der Aufnahmen kann in vorteilhafter Weise die Auswerte- und Steuereinheit mit einer Fernübertragungseinheit verbunden sein und dazu ausgelegt, diese Daten an ein vom Fahrzeug entfernten Ort zu übertragen.

Die Auswerte- und Steuereinheit kann ferner ausgelegt sein, die Kameraeinheit nach einer Alkoholmessung und unmittelbar nach einer von der Fahrkontrolleinheit erfassten Fahrzeugbewegung zu aktivieren. Alternativ dazu kann die Auswerte- und Steuereinheit ausgelegt sein, die Kameraeinheit nach einer Mindestfahrzeit zu aktivieren. Zusätzlich zu der Mindestfahrzeit kann die Auswerte- und Steuereinheit zur Aktivierung der Kameraeinheit eine Mindestgeschwindigkeit und/oder eine Mindestbeschleunigung und/oder eine Mindestfahrstrecke berücksichtigen.

Ferner kann der Fahrer des Fahrzeuges nach einer durch einen Zufallsgenerator erzeugten Zeit aufgefordert werden, einen weiteren Alkoholtest durchzuführen. Die Anzahl dieser Wiederholungstests kann dabei von einer Gesamtfahrdauer des Fahrzeuges abhängen.

Die erfindungsgemäße Vorrichtung ermöglicht das Gefährdungspotential einer unter Einfluss von Alkohol stehenden Fahrperson durch die Erhöhung der Manipulationssicherheit einer Alkoholmessung zu reduzieren.

Die erfindungsgemäße Vorrichtung kann bei einem Alkohol-Interlock-System zum Starten eines Fahrzeugs, Schiffs oder Flugzeuges nach einer erfolgten Alkoholmessung vorgesehen sein.

Die vorliegende Erfindung wird mit Bezug auf die beigefügten Zeichnungen detaillierter erläutert, wobei gleiche Bezugszeichen gleiche Figuren bezeichnen.

In der Zeichnung gilt:
- Fig. 1: ist eine schematische Darstellung einer Ausführung der erfindungsgemäßen Vorrichtung in einem Fahrzeug und
- Fig. 2: ist ein Blockschaltbild der erfindungsgemäßen Vorrichtung in einem Alkohol-Interlock-System.

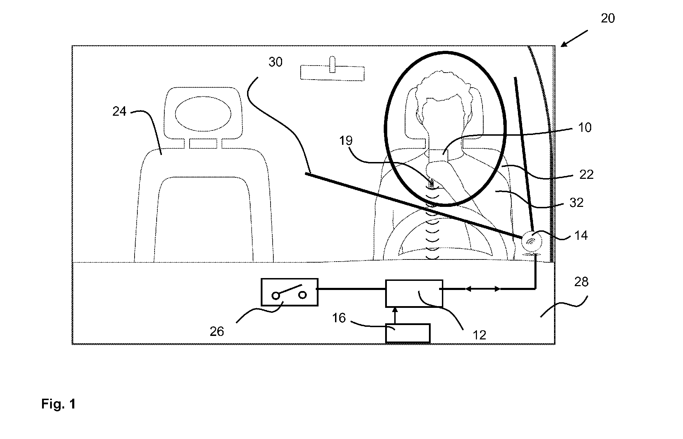

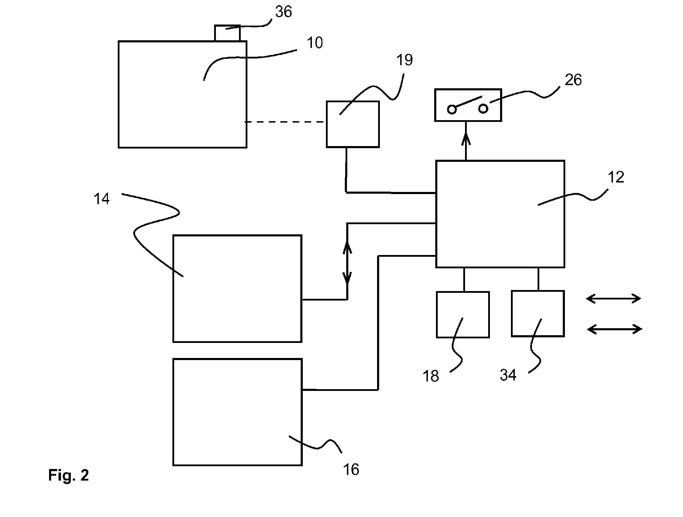

In Fig. 1 ist die erfindungsgemäße Vorrichtung zur Erkennung einer korrekten Anwendung eines Alkoholmessgerätes 10 von einem Fahrer 32 in einem Fahrzeug 20 in Kombination mit einem Alkohol-Interlock-System dargestellt. Die Fig. 1 zeigt die vordere Ansicht des Fahrzeuges 20 mit einem Fahrersitz 22 und einem Beifahrersitz 24. Das Alkohol-Interlock-System besteht aus dem Alkoholmessgerät 10 einer Auswerte- und Steuereinheit 12 (Blockschaltbild der Fig. 2) und einer Startvorrichtung 26. Die Auswerte- und Steuereinheit 12 befindet sich unter einem Armaturenbrett 28. Die Auswerte- und Steuereinheit 12 ist u. a. vorgesehen, eine Startvorrichtung 26 des Fahrzeugs 20 frei zu schalten bzw. zu blockieren. Das Alkoholmessgerät 10 ist als ein Atemalkoholmessgerät ausgebildet, welches den Alkoholgehalt einer von dem Fahrer 32 abgegebenen Atemprobe misst. Der Fahrer 32 gibt dabei eine Atemprobe durch ein Mundstück 36 (Fig. 2) in das Alkoholmessgerät 10 ab. Das Messergebnis wird an die Auswerte- und Steuereinheit 12 übertragen. Die Übertragung erfolgt über einen Kommunikationsanschluss 19 für eine drahtlose Kommunikation von dem Alkoholmessgerät zur Auswerte- und Steuereinheit 12. Alternativ dazu kann auch eine drahtgebundene Kommunikation von dem Alkoholmessgerät 10 zur Auswerte- und Steuereinheit 12 vorgesehen sein. Entsprechend dem Messergebnis der Atemalkoholkonzentration kann die Starteinrichtung 26 des Fahrzeuges 20 von der Auswerte- und Steuereinheit 12 freigeschaltet oder blockiert werden. Mit einer Freischaltung der Starteinrichtung 26 kann der Motor des Fahrzeuges 20 gestartet werden.

Eine auf dem Armaturenbrett 28 vorgesehene Kameraeinheit 14 weist ein Bildfeld 30 auf, womit wenigstens ein Gesichtsbereich des Fahrers 32 erfassbar ist. Die Auswerte- und Steuereinheit 12 ist mit einer Fahrkontrolleinheit 16, der Kameraeinheit 14 und dem Alkoholmessgerät 10 verbunden.

Die Fahrkontrolleinheit 16 dient zur Erkennung einer Fahrzeugbewegung. Die Kameraeinheit 14 ist von der Auswerte- und Steuereinheit 12 in Abhängigkeit der Fahrkontrolleinheit 16 aktivierbar. Die Fahrkontrolleinheit 16 kann als ein Beschleunigungssensor ausgeführt sein. Mit der Fahrkontrolleinheit 16 kann eine zuverlässige Aussage getroffen werden, ob das Fahrzeug 20 fortbewegt wurde oder nicht. Alternativ dazu kann als Fahrkontrolleinheit 16 ein satellitengestütztes Navigationssystem (nicht dargestellt) vorgesehen sein.

Ferner ist eine Datenspeichereinheit 18 vorgesehen (Fig. 2), in die wenigstens eine Aufnahme des Fahrers 32 speicherbar ist. Vor dem Start des Fahrzeuges 20 wird der Fahrer 32 aufgefordert, eine Atemalkoholmessung durchzuführen. Der Zeitpunkt der Atemalkoholmessung kann mittels Sensorik in dem Alkoholmessgerät 10 erkannt werden und an die Auswerte- und Steuereinheit 12 übermittelt werden. Während der Atemalkoholmessung bzw. unmittelbar danach, ist die Kameraeinheit 14 durch die Auswerte- und Steuereinheit 12 zur Aufnahme des Fahrers 32 auf dem Fahrersitz 22 aktivierbar. Die Aufnahme wird vorzugsweise in der Speichereinheit 18 abgelegt. Eine erste Fahrzeugbewegung des Fahrzeuges 20 wird durch die Fahrkontrolleinheit 16 erkannt und diese Information an die Auswerte- und Steuereinheit 12 übermittelt. Die Fahrzeugbewegung des Fahrzeuges 20 wird als Trigger von der Auswerte- und Steuereinheit 12 zur Aktivierung der Kameraeinheit 14 verwendet. Die Kameraeinheit 14 nimmt den Fahrer 32 auf dem Fahrersitz 22 auf.

Alternativ dazu kann die Aktivierung der Kameraeinheit 14 durch die Auswerte- und Steuereinheit 12 auch mit einer Zeitverzögerung nach Erkennung einer Fahrzeugbewegung erfolgen, beispielsweise nachdem eine Mindestfahrzeit erreicht worden ist. In einer weiteren Ausführung kann diese Mindestfahrzeit mittels eines Zufallsgenerators variiert werden.

Anstelle der Mindestfahrzeit kann auch eine Mindestgeschwindigkeit oder eine Mindestbeschleunigung oder aber auch eine Mindestfahrstrecke des Fahrzeuges 20 die Grundlage für eine Aktivierung der Kameraeinheit 14 zur Aufnahme des Fahrers 32 bilden. Ferner ist auch eine Kombination aus Mindestfahrzeit, Mindestgeschwindigkeit, Mindestbeschleunigung oder Mindestfahrstrecke denkbar.

Eine Aufnahme des Fahrers 32 durch die Kameraeinheit 14 wird wiederum in der Datenspeichereinheit 18 abgelegt. In vorteilhafter Weise kann nun die Aufnahme des Fahrers 32 die während einer Fahrzeugbewegung (erkannt durch die Fahrkontrolleinheit 16) erzeugt worden ist, mit der Aufnahme des Fahrers 32 verglichen werden, die während oder unmittelbar nach Durchführung der Alkoholmessung erfolgte. Eine Abweichung der Aufnahmen kann wiederum dokumentiert und über eine in der Fig. 2 dargestellte Fernübertragungseinheit 34 an einen vom Fahrzeug entfernten Ort gesendet werden.

Die Fig. 2 zeigt das Blockschaltbild der erfindungsgemäßen Vorrichtung in einem Alkohol-Interlock-System. Aus der Verbindung der Auswerte- und Steuereinheit 12 sowohl mit dem Alkoholmessgerät 10 und der Kameraeinheit 14 als auch mit der Fahrkontrolleinheit 16 ist ersichtlich, dass die Kameraeinheit 14 von der Auswerte- und Steuereinheit 12 in Abhängigkeit der Fahrkontrolleinheit 16 zur Aufnahme des Fahrers 32 aktivierbar ist. Vor einer Aufnahme der Kameraeinheit 14 wird also der Bewegungszustand des Fahrzeugs 20 über die Fahrkontrolleinheit 16 ermittelt, an die Auswerte- und Steuereinheit 12 übertragen, welche wiederum die Kameraeinheit 14 in Abhängigkeit einer Fahrzeugbewegung steuert. Ferner kann das komplette Alkohol-Interlock-System mittels einer Fernübertragungseinheit 34 mit einer zentralen Speichereinheit verbunden sein, auf welche die Aufnahmen der Kameraeinheit 14 und / oder die Ergebnisse von Vergleichen verschiedener Aufnahmen der Kameraeinheit 14 in regelmäßigen Abständen übertragen werden. Kriterien für die Übertragung können sowohl zeitliche Abstände, beispielsweise Tage sein oder das Speichervolumen der im Fahrzeug 20 integrierten Speichereinheit 18 oder eine Kombination aus beiden.

Die Anwendung der erfindungsgemäßen Vorrichtung in Kombination mit einem Interlocksystem in einem Fahrzeug 20 stellt nur eine Ausführungsvariante dar. Alternativ hierzu kann die erfindungsgemäße Vorrichtung auch in einem Flugzeug integriert sein.

Während die vorliegende Erfindung unter Bezugnahme auf die bevorzugten Ausführungsbeispiele beschrieben worden ist, sind dem Fachmann verschiedene Änderungen und Modifikationen klar. All diese Änderungen und Modifikationen sollen in den Schutzbereich der angefügten Ansprüche fallen.

### BEZUGSZEICHENLISTE

- 10: Alkoholmessgerät
- 12: Auswerte- und Steuereinheit
- 14: Kameraeinheit
- 16: Fahrkontrolleinheit
- 18: Datenspeichereinheit
- 19: Kommunikationsanschluss für eine drahtlose Kommunikation von dem Alkoholmessgerät zur Auswerte- und Steuereinheit
- 20: Fahrzeug
- 22: Fahrersitz
- 24: Beifahrersitz
- 26: Starteinrichtung
- 28: Armaturenbrett
- 30: Bildfeld der Kameraeinheit
- 32: Fahrer
- 34: Fernübertragungseinheit
- 36: Mundstück

## Patentansprüche

1. Vorrichtung zur Erkennung einer korrekten Anwendung eines Alkoholmessgerätes von einem Fahrer in einem Fahrzeug umfassend wenigstens das Alkoholmessgerät (10) eine Auswerte- und Steuereinheit (12) und eine Kameraeinheit (14), wobei von dem Bildfeld (30) der Kameraeinheit (14) wenigstens ein Gesichtsbereich des Fahrers (32) erfassbar ist, **dadurch gekennzeichnet, dass**
die Auswerte- und Steuereinheit (12) mit einer Fahrkontrolleinheit (16) zur Erkennung einer Fahrzeugbewegung, der Kameraeinheit (14) und dem Alkoholmessgerät (10) verbunden ist und die Kameraeinheit (14) von der Auswerte- und Steuereinheit (12) in Abhängigkeit der Fahrkontrolleinheit (16) in der Weise aktivierbar ist, dass wenigstens der Gesichtsbereich des Fahrers (32) erfasst wird.

2. Vorrichtung nach Anspruch 1, **dadurch gekennzeichnet, dass** die Kameraeinheit (14) von der Auswerte- und Steuereinheit (12) in Abhängigkeit des Alkoholmessgerätes (10) zur Aufnahme des Fahrers (32) aktivierbar ist.

3. Vorrichtung nach einem der vorhergehenden Ansprüche, **dadurch gekennzeichnet, dass** die Fahrkontrolleinheit (16) einen Beschleunigungssensor und/oder einen Empfänger für einen satellitengestütztes Navigationssystem umfasst.

4. Vorrichtung nach einem der vorhergehenden Ansprüche, **dadurch gekennzeichnet, dass** die Fahrkontrolleinheit (16) mit dem CAN-Bus des Fahrzeugs (20) verbunden ist.

5. Vorrichtung nach einem der vorhergehenden Ansprüche, **dadurch gekennzeichnet, dass** die Kameraeinheit (14) im Fahrzeug (20) so angebracht ist, dass das Bildfeld (30) der Kameraeinheit (14) den Bereich eines Fahrersitzes (22) vollständig umfasst.

6. Vorrichtung nach einem der vorhergehenden Ansprüche, **dadurch gekennzeichnet, dass** eine Datenspeichereinheit (18) vorgesehen ist, in welcher wenigstens eine Aufnahme des Fahrers (32) speicherbar ist.

7. Vorrichtung nach Anspruch 6, **dadurch gekennzeichnet, dass** die Auswerte- und Steuereinheit (12) eingerichtet ist, eine von der Kameraeinheit (14) aufgenommene Aufnahme des Fahrers (32) in Echtzeit mit der wenigstens einen Aufnahme des Fahrers (32) aus der Datenspeichereinheit (18) zu vergleichen.

8. Vorrichtung nach Anspruch 7, **dadurch gekennzeichnet, dass** die Auswerte- und Steuereinheit (12) mit einer Fernübertragungseinheit (34) zur Übertragung von Daten an einen vom Fahrzeug (20) entfernten Ort verbunden ist.

9. Verfahren zur Erkennung einer korrekten Anwendung eines Alkoholmessgerätes (10) von einem Fahrer (32) in einem Fahrzeug (20) bei dem eine Auswerte- und Steuereinheit (12), eine Kameraeinheit (14) zur Aufnahme des Fahrers (32) in Abhängigkeit von einer Fahrzeugbewegung aktiviert, wobei ein Bildfeld (30) der Kameraeinheit (14) wenigstens einen Gesichtsbereich des Fahrers (32) erfasst und die Fahrzeugbewegung von einer Fahrkontrolleinheit (16) erfasst wird.

10. Verfahren nach Anspruch 9, **dadurch gekennzeichnet, dass** die Kameraeinheit (14) nach einer Alkoholmessung und unmittelbar nach einer von der Fahrkontrolleinheit (16) erfassten Fahrzeugbewegung von der Auswerte- und Steuereinheit (12) aktiviert wird.

11. Verfahren nach Anspruch 10, **dadurch gekennzeichnet, dass** die Kameraeinheit (14) nach einer wiederholenden Alkoholmessung und unmittelbar nach einer von der Fahrkontrolleinheit (16) erfassten Fahrzeugbewegung von der Auswerte- und Steuereinheit (12) aktiviert wird.

12. Verfahren nach einem der Ansprüche 9 bis 11, **dadurch gekennzeichnet, dass** die Kameraeinheit (14) nach einer Mindestfahrzeit und/oder Mindestgeschwindigkeit und/oder Mindestbeschleunigung und/oder Mindestfahrstrecke von der Auswerte- und Steuereinheit (12) aktiviert wird.

13. Verfahren nach einem der Ansprüche 9 bis 12, **dadurch gekennzeichnet, dass** eine Aufnahme des Fahrers (32) in einer Datenspeichereinheit (18) gespeichert wird.

14. Verfahren nach Anspruch 13, **dadurch gekennzeichnet, dass** eine Echtzeitaufnahme des Fahrers (32) mit wenigstens einer Aufnahme des Fahrers (32) aus der Datenspeichereinheit (18) verglichen wird.

15. Verfahren nach einem der Ansprüche 9 bis 14, **dadurch gekennzeichnet, dass** die Auswerte- und Steuereinheit (12) Daten an einen vom Fahrzeug (20) entfernten Ort sendet.
